# EUROPÄISCHE PATENTSCHRIFT

(11) **EP 2 167 849 B1**
(45) Veröffentlichungstag und Bekanntmachung des Hinweises auf die Patenterteilung: **10.10.2012**
(21) Anmeldenummer: 08759073.3
(22) Anmeldetag: 06.06.2008
(51) Int. Cl.: F16K 1/44

(54) **SITZREINIGUNGSFÄHIGES DOPPELSITZVENTIL**
DOUBLE SEAT VALVE WITH SEAT CLEANING
SOUPAPE À DOUBLE SIÈGE À POSSIBILITÉ DE NETTOYAGE DE SIÈGE

(30) Priorität: 14.06.2007 DE 102007027464
(43) Veröffentlichungstag der Anmeldung: 31.03.2010
(73) Patentinhaber: GEA Tuchenhagen GmbH, 21514 Büchen (DE)
(72) Erfinder: BURMESTER, Jens, 23883 Grambek (DE); SUEDEL, Matthias, 23626 Ratekau (DE)
(74) Vertreter: Mönkemeyer, Philipp
(86) Internationale Anmeldenummer: PCT/EP2008/004535
(87) Internationale Veröffentlichungsnummer: WO 2008/151763

(56) Entgegenhaltungen:
- EP-A- 0 044 517
- EP-A- 0 174 384
- WO-A-2007/054131
- DE-C2- 3 835 944
- US-A- 5 806 554

## Beschreibung

### TECHNISCHES GEBIET

Die Erfindung betrifft ein sitzreinigungsfähiges Doppelsitzventil mit zwei seriell angeordneten, relativ zueinander bewegbaren Schließgliedern nach dem Oberbegriff des Anspruchs 1.

### STAND DER TECHNIK

Ein sitzreinigungsfähiges Doppelsitzventil, das hinsichtlich seiner Schließgliedkonfiguration wesentliche Merkmale des Doppelsitzventils der einleitend gekennzeichneten Gattung aufweist und das durch spaltweites Öffnen seiner Sitzflächen eine Reinigung der jeweils freigelegten Sitzfläche gestattet, ist aus der DE 38 35 944 C2 bekannt. Bei jeder der drei Dichtungen im bekannten Doppelsitzventil handelt es sich um eine diskrete Dichtung, wobei jeder Dichtung nur eine einzige Funktion zukommt. Die erste Dichtung im ersten Schließglied ist eine rein radial wirkende Dichtung, die in der als zylindrische Mantelfläche ausgebildeten ersten Sitzfläche gleitet und dort infolge der vorgesehenen Vorspannung abdichtet (Dichtung mit Gleiteingriff). Die zweite Dichtung im zweiten Schließglied wirkt auf die kegelförmig ausgebildete zweite Sitzfläche, so dass hier von einer axial/radial wirkenden Dichtung gesprochen werden kann (Dichtung mit Druckeingriff). Im Regelfall befindet sich an der zweiten Sitzfläche auch der feste Anschlag für die Endlagenbegrenzung des zweiten Schließgliedes (Schließstellung), wenn eine Dichtung mit Druckeingriff vorgesehen ist. Die dritte Dichtung, die sog. Mitteldichtung, entfaltet dann ihre Wirkung, wenn das erste Schließglied beim Öffnungshub am zweiten Schließglied über diese Mitteldichtung zur Anlage kommt und im Zuge der weiteren Öffnungsbewegung das zweite Schließglied in die volle Offenstellung mitnimmt (Dichtung im Druckeingriff). Dabei ist die Mitteldichtung in einer dem Leckagehohlraum zugewandten Stirnfläche am zweiten, abhängig angetriebenen Schließglied angeordnet.

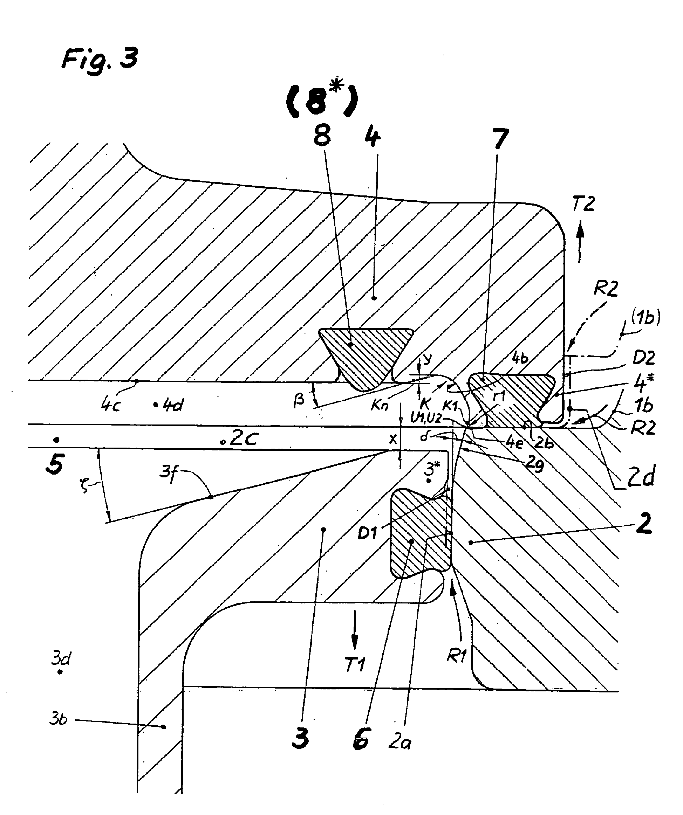

Das vorstehend kurz skizzierte bekannte Doppelsitzventil verfügt über zwei sog. Sitzreinigungsstellungen, wobei die erste Sitzreinigungsstellung durch den dem Öffnungshub entgegengerichteten ersten Teilhub des ersten Schließgliedes erzeugt wird. Bei der Sitzreinigungsstellung des ersten Schließgliedes (bezogen auf die Zeichnungslage gemäß Figur 3 ist dies das untere Schließglied) wird gleichzeitig auch eine Durchführung eines als Druckausgleichkolben ausgebildeten, mit dem ersten Schließglied verbundenen Ablaufrohres durch das untere Ventilgehäuse zwecks Reinigung der zugeordneten Dichtung freigelegt. Die Sitzreinigungsstellung des zweiten (oberen) Schließgliedes ist in der DE 38 35 944 C2 nicht weiter thematisiert; sie erfolgt durch den dem Öffnungshub gleichgerichteten zweiten Teilhub. Die Limitierung der jeweiligen Reinigungsmittelmenge bei der Sitzreinigung erfolgt durch eine mehr oder weniger aufwendige und oftmals nicht hinreichende Justierung des freigelegten Spaltes zwischen jeweiliger Dichtung und der zugeordneten Sitzfläche.

Die Forderungen, die an ein derartiges sitzreinigungsfähiges Doppelsitzventil in bestimmten Ländern gestellt werden, gehen über die vorg. Limitierung hinaus und sind weitergehend. So wird beispielsweise in den USA gefordert, dass bei größeren Dichtungsdefekten oder gar dem Verlust einer der beiden Sitzdichtungen des in der Schließstellung befindlichen Schließgliedes im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.

Ein Doppelsitzventil, das sich bei der Sitzreinigung allein auf das Freilegen der Sitzfläche im Bereich des jeweils zugeordneten Schließgliedes beschränkt und das darüber hinaus eine Verbindung des Leckagehohlraumes mit der Umgebung des Doppelsitzventils verwirklicht, wobei der Durchtrittsquerschnitt der Verbindung annähernd dem Durchtrittsquerschnitt der an das Doppelsitzventil angeschlossenen größten Rohrnennweite entspricht, ist in der Firmendruckschrift **"Betriebsanleitung BAA D620-PMO.32, Doppelsitzventil Typ D 620 PMO"** der Südmo Components GmbH, D-73469 Riesbürg, beschrieben. Dieses Doppelsitzventil ist durch seine großzügige Bemessung der Verbindungsleitung zwischen Leckagehohlraum und Umgebung grundsätzlich geeignet, bei größeren Dichtungsdefekten einen Druckaufbau im Leckagehohlraum zu verhindern. Die Forderung nach einer Vermeidung einer Direktbeaufschlagung der Sitzbereiche im Zuge der Sitzreinigung und auch nach einer möglichst verwirbelungsfreien Abfuhr der Sitzreinigungsströmung zunächst in den Leckagehohlraum und von dort in die Umgebung kann das bekannte Doppelsitzventil nicht erfüllen.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, so dass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren eine Leckageströmung über den jeweiligen Spalt zwischen Schließglied und zugeordneter Sitzfläche und die defekte oder die gänzlich nicht mehr vorhandene Sitrdichtung.

Ein direktes Auftreffen der Sitzreinigungsströmung auf die den Leckagehohlraum begrenzenden Flächen ist daher in jedem Falle kontraproduktiv. Bei den beiden vorstehend beschriebenen, bekannten Doppelsitzventilen kann die erste Sitzreinigungsströmung, die durch Anlüften des ersten Schließgliedes um den ersten Teilhub generiert wird, auf die stirnseitige Begrenzungsfläche des zweiten Schließgliedes, die die Mitteldichtung aufnimmt, mehr oder weniger lotrecht auftreffen. An der Auftreffstelle wird diese Strömung überwiegend zum Zentrum des Leckagehohlraumes umgelenkt und die Strömung tangiert u.a. auch die aus der Stirnfläche hervorstehende Mitteldichtung. Weiterhin ergibt sich an der Auftreffstelle eine Verzweigungsstromlinie, deren dem Sitzbereich zugewandter Abzweig dort einen Wirbel und einen Staudruck generieren kann. Die zweite Sitzreinigungsströmung, die durch Anlüften des zweiten Schließgliedes um den zweiten Teilhub generiert wird, trifft auf die stirnseitige Begrenzungsfläche des ersten Schließgliedes auf, und auch hier kann ein Teil der zwischen Verzweigungsstromlinie und Sitzbereich befindlichen Strömung letzterem staudruckbildend zugeführt werden.

In der WO 20071054 131 A1**,** aus der ein sitzreinigungsfähiges Doppelsitzventil der einleitend gekennzeichneten Gattung bekannt ist, werden bereits Maßnahmen vorgeschlagen, die eine möglichst verwirbelungsfreie Ableitung der Sitzreinigungsströmung in den und aus dem Leckagehohlraum sicherstellen und eine druckerhöhende Direktbeaufschlagung der Sitzbereiche vermeiden. Diese Maßnahmen beziehen sich allerdings auf ein Doppelsitzventil mit den Merkmalen der DE 196 08 792 A1. Dieses dort beschriebene Doppelsitzventil zeichnet sich insbesondere dadurch aus, dass jedes Schließglied leckageraumseitig einen an sich bekannten zylindrischen Ansatz aufweist, der mit einer zugeordneten Verbindungsbohrung zwischen den Ventilgehäuseteilen einen ringförmigen Drosselspalt bildet, dass ein dem kleineren Schließglied zugeordneter erster Abschnitt der Verbindungsbohrung einen Durchmesser aufweist, der kleiner ist als der Durchmesser eines dem anderen Schließglied zugeordneten zweiten Abschnittes der Verbindungsbohrung, und dass eine Übergangsfläche zwischen den beiden Abschnitten vorgesehen ist, die mit dem durchmessergrößeren Abschnitt einen stumpfen, vorzugsweise einen senkrechten Umlenkungswinkel bildet. Beim Doppelsitzventil gemäß WO 2007/054 131 A1 ist am zweiten Schließglied, dem, bezogen auf eine senkrechte Anordnungslage, oberen Schließglied, ebenfalls leckageraumseitig ein zylindrischer Ansatz angeordnet, der mit der zugeordneten Verbindungsöffnung einen ringförmigen Drosselspalt bildet. Letzterer begrenzt die Sitzreinigungsströmung, wenn sich das zweite Schließglied in seiner Sitzreinigungsstellung befindet.

Es ist Aufgabe der vorliegenden Erfindung, ein Doppelsitzventil der einleitend gekennzeichneten Gattung derart weiterzuentwickeln, dass eine Begrenzung der Sitzreinigungsströmung und eine möglichst verwirbelungsfreie Ableitung der Sitzreinigungsströmung in den und aus dem Leckagehohlraum sichergestellt ist und eine druckerhöhende Direktbeaufschlagung der Sitzbereiche sicher vermieden wird.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des sitzreinigungsfähigen Doppelsitzventils gemäß der Erfindung sind in den Unteransprüchen beschrieben.

Das Prinzip der separaten Mitteldichtung, der die Aufgabe zukommt, in der sog. Abholstellung und beim Vollzug der weiteren Öffnungsbewegung bis zur Offenstellung die beiden Schließglieder gegeneinander abzudichten, wird dabei in jedem Falle beibehalten, wobei die erfindungsgemäße Lösung hinsichtlich der Lage der Mitteldichtung keineswegs nur auf eine der beiden nachstehend vorgeschlagenen Anordnungen festgelegt ist. Die erfindungsgemäße Lösung erlaubt grundsätzlich entweder die Anordnung der Mitteldichtung in der Stirnfläche des zweiten Schließgliedes oder alternativ in der Stirnfläche des ersten Schließgliedes.

Bei dem erfindungsgemäßen Doppelsitzventil wird in an sich bekannter Weise die bei der jeweiligen Sitzreinigung aus dem zugeordneten Spalt zwischen Sitzdichtung und Sitzfläche austretende Sitzreinigungsströmung möglichst verwirbelungs - und hindernisfrei in den Leckagehohlraum eingeleitet und von dort in gleicher Weise in die Umgebung abgeführt. Dies gelingt zum einen durch eine die Sitzreinigungsströmungen im Leckagehohlraum führende und lenkende Strömungskontur. Diese Strömungskontur sorgt bei der Sitzreinigung des unten liegenden, ersten Schließgliedes dafür, dass die erste Sitzreinigungsströmung dem Wandverlauf im Bereich der ersten Sitzfläche ablösungsfrei folgt. Anschließend erfolgt in einer zentrischen Ausnehmung, die in der dem Leckagehohlraum zugewandten Stirnfläche des zweiten Schließgliedes vorgesehen ist, eine stoßfreie Umlenkung dieser ersten Sitzreinigungsströmung, so dass letztere in eine zentrisch im ersten Schließglied angeordnete Ablaufbohrung gelangen kann, ohne mit dem ersten Schließglied im Bereich seiner den Leckagehohlraum berandenden Bereiche oder der Mitteldichtung staudruckbildend zu kollidieren. Die zentrische Ausnehmung wird im Wesentlichen von einer rotationssymmetrischen Umlenkfläche gebildet, die radial außenseits an der in Rede stehenden Stirnfläche des zweiten Schließgliedes beginnt und die stirnseitig von einer im Wesentlichen senkrecht zur Längsachse des zweiten Schließgliedes orientierten Stirnfläche begrenzt ist, wobei die Umlenkfläche in die Stirnfläche ausmündet.

Wesentlich ist die stoßfreie Umlenkung der Sitzreinigungsströmung in der Umlenkfläche. Dies gelingt dadurch, dass, im Meridianschnitt gesehen, die Umlenkfläche eine Kontur mit knickfreiem Verlauf aufweist, wobei ein Richtungsvektor im Ausmündungspunkt der Umlenkfläche unter den vorg. Bedingungen in die zentrisch im ersten Schließglied angeordnete Ablaufbohrung weist. Es ist weiterhin wesentlich, dass am Anfangspunkt der Kontur eine zweite Umlaufkante ausgebildet ist, die in der Schließstellung des zweiten Schließgliedes unmittelbar an einen ersten Endabschnitt der ersten Sitzfläche angrenzt.

Bei der Strömungsführung der durch Anlüften des zweiten Schließgliedes generierten zweiten Sitzreinigungsströmung ist wesentlich, dass diese an einer durch die zweite Sitzfläche und den ersten Endabschnitt der ersten Sitzfläche gebildete ersten Umlaufkante definiert ablöst und an den das erste Schließglied im Bereich des Leckagehohlraumes berandenden Flächen sicher tangential vorbeigeführt wird. Zu diesem Zweck ist zwischen der ersten Umlaufkante und den in Frage kommenden Bereichen des ersten Schließgliedes ein Sicherheitsabstand vorgesehen, der unter allen möglichen fertigungstechnischen Gegebenheiten ein diesbezügliches Auftreffen verhindert.

Zur Lösung der der Erfindung zugrunde liegenden Aufgabe besteht der erfinderische Grundgedanke zum Einen darin, die Endlagenbegrenzung, den wünschenswerten, jedoch nicht in allen Fällen realisierten oder realisierbaren festen Anschlag des zweiten Schließgliedes (Schieberkolben mit radial wirkender Dichtung im Gleiteingriff oder ggf. Sitzteller mit radial/axial wirkender Dichtung im Gleit-/Druckeingriff) in dessen Schließstellung, an das Ende der zweiten Sitzfläche zu verlagern, und zwar unmittelbar an die erste Sitzfläche angrenzend. Dies gelingt erfindungsgemäß dadurch, dass die Anschlagfläche an einer der zweiten Dichtung radial innenseits benachbarten Begrenzungsfläche des zweiten Schließgliedes angeordnet ist und in der Schließstellung des zweiten Schließgliedes an der zweiten Sitzfläche anliegt. Durch diese Maßnahme wird der bislang vorhandene, an den Leckagehohlraum angrenzende Spalt zwischen dem zweiten Schließglied und dem Ventilgehäuse beseitigt, wobei es sich in der Regel um einen metallischen Verschluss handelt. Über den metallisch geschlossenen Spalt zwischen dem zweiten Schließglied und der zweiten Sitzfläche kann nunmehr im Zuge der Sitzreinigung des ersten Schließgliedes kein Reinigungsmittel an die ggf. defekte oder ggf. gänzlich nicht mehr vorhandene zweite Sitzdichtung gelangen.

Ein derartiges definiertes Schließen dieses kritischen Spaltes wurde bislang bei bekannten Doppelsitzventilen der eingangs beschriebenen Art, ausgenommen das gattungsbildende Doppelsitzventil, nicht vorgesehen. Wesentlich bei der Realisierung des erfinderischen Grundgedankens ist, dass sich die jeweilige Anschlagfläche am zweiten Schließglied und am Ventilgehäuse unmittelbar, vollständig umlaufend und, soweit dies bei festem bzw. metallischem Kontakt möglich ist, dicht am Leckagehohlraum berühren. Die Freiheitsgrade bei der Ausgestaltung des zweiten Schließgliedes hinsichtlich möglicher Wirkmechanismen der Sitzdichtung werden durch die vorg. Anschlagfläche nicht begrenzt. Prinzipiell können in diesem Bereich rein radial, radial/axial und rein axial wirkende zweite Dichtungen vorgesehen werden.

Die vorgeschlagene erfinderische Lösung beinhaltet zum Anderen, dass das zweite Schließglied, bezogen auf seine zweite Dichtung, radial außenseits eine zylindrische Umfangskontur aufweist, und dass die Umfangskontur mit einer ringförmigen zylindrischen Ausnehmung in der Verbindungsöffnung auf der Seite des zweiten Schließgliedes einen ringförmigen zweiten Drosselspalt bildet. Durch diesen an sich bekannten Drosselspalt wird die Reinigungsmittelmenge bei der Sitzreinigung des zweiten Schließgliedes begrenzt.

Die Reinigungsmittelmenge bei der Sitzreinigung des ersten Schließgliedes wird ebenfalls begrenzt, wenn, gemäß einer weiteren Ausführungsform, am ersten Schließglied leckageraumseitig ein zylindrischer Ansatz vorgesehen ist, der mit der ersten Sitzfläche einen ringförmigen ersten Drosselspalt bildet.

Gemäß einem ersten Vorschlag ist die Mitteldichtung in der Stirnfläche des zweiten Schließgliedes angeordnet, wobei hier eine Stelle in der Stirnfläche der Ausnehmung radial innenseits von der Umlenkfläche in Frage kommt. Hierbei ist dafür Sorge zu tragen, dass zunächst die Umlenkfunktion der durch die Ausnehmung vorrangig gebildeten Umlenkfläche für die erste Sitzreinigung gewährleistet ist und die erste Sitzreinigungsströmung in ihrem weiteren Verlauf an der Mitteldichtung keine Behinderung dergestalt erfährt, dass es zur Wirbelbildung und zu Ablösungserscheinungen im Leckagehohlraum kommt, die zur lokalen Staudruckbildung führen kann. Das erste Schließglied stellt im vorliegenden Falle an einer zugeordneten Fläche seines Endabschnittes eine Dichtfläche für diese Mitteldichtung bereit.

Ein weiterer Vorschlag sieht vor, eine alternative Mitteldichtung in der dem Leckagehohlraum zugewandten stirnseitigen Begrenzung des ersten Schließgliedes anzuordnen, wobei diese alternative Mitteldichtung dann vorzugsweise mit der Stirnfläche der Ausnehmung im zweiten Schließglied zusammenwirkt, und zwar mit einem Bereich radial innenseits von der Umlenkfläche. Andere Kontaktstellen sind jedoch auch möglich, wobei auch die Umlenkfläche selbst nicht auszuschließen ist.

Bei beiden Anordnungsvarianten der Mitteldichtung wird der Sicherheitsabstand des ersten Schließgliedes vom Richtungsvektor an der Austrittsstelle der zweiten Sitzfläche in den ersten Endabschnitt der ersten Sitzfläche derart bemessen, dass dieser wenigstens so groß wie die Summe aller Fertigungstoleranzen der Bauteile des Doppelsitzventils ist, die in der Schließstellung des ersten Schließgliedes dessen geringsten axialen Abstand zur zweiten Sitzfläche bestimmen. Bei Anordnung der alternativen Mitteldichtung im ersten Schließglied ist dieser Sicherheitsabstand um einen Betrag zu vergrößern, um den diese aus der dem Leckagehohlraum zugewandten stirnseitigen Begrenzung des ersten Schließgliedes herausragt.

Ein weiterer Vorschlag sieht vor, dass ein Richtungsvektor am Anfangspunkt der Kontur der Umlenkfläche mit dem ersten Endabschnitt der ersten Sitzfläche fluchtet. Diese bevorzugte Ausführungsform stellt einen weitestgehenden stoßfreien Eintritt der ersten Sitzreinigungsströmung in die Umlenkfläche und damit in die Ausnehmung im zweiten Schließglied sicher. Die vorgenannte Bedingung ist sowohl für einen zylindrischen Endabschnitt einzuhalten, der mit der zylindrischen ersten Sitzfläche fluchtet, als auch für einen konisch sich erweiternden ersten Endabschnitt (einer sog. Einfahrschräge), der im Rahmen der Erfindung gleichfalls vorgesehen ist. Der konisch sich erweiternde Endabschnitt kann dabei ausschließlich gekrümmte oder gekrümmte und gerade Konturelemente aufweisen.

Die erfindungsgemäß vorgeschlagene erste Einfahrschräge erleichtert das Einfahren der ersten Dichtung in die zylindrische erste Sitzfläche und vermindert dadurch den Verschleiß dieser Dichtung. Strömungstechnisch ist diese Einfahrschräge jedoch eher von Nachteil, da sie die erste Sitzreinigungsströmung durch Vergrößerung des Strömungsquerschnittes verzögert und damit eine Ablösungsgefahr für die Strömung darstellt. Es wird in diesem Zusammenhang vorgeschlagen, den die erste Einfahrschräge ausbildenden ersten Endabschnitt durch wenigstens eine Kegelmantelfläche darzustellen. Damit die erste Sitzreinigungsströmung an der Kontur dieser Kegelmantelfläche nicht ablöst, wird vorgeschlagen, den ersten Endabschnitt um einen Anstellwinkel zu neigen, der im Bereich zwischen 0 und 15 Grad, bevorzugt im Bereich zwischen 5 bis 15 Grad und hier wiederum bevorzugt mit 15 Grad ausgeführt ist.

Um die erste Einfahrschräge ablösungsfester auszugestalten, sieht ein weiterer Vorschlag vor, dass der erste Endabschnitt durch zwei mit einem Abrundungsradius abgerundet ineinander übergehende Kegelmantelflächen gebildet ist, wobei ein sich an die erste Sitzfläche unmittelbar anschließender zweiter Kegelmantel um einen zweiten Anstellwinkel gegen die erste Sitzfläche und der andere Kegelmantel um einen ersten Anstellwinkel gegen die erste Sitzfläche geneigt sind. Dabei sind der erste Anstellwinkel im Bereich 7,5 bis 15 Grad, bevorzugt mit 15 Grad und der zweite Anstellwinkel im Bereich 5 bis 10 Grad, bevorzugt mit 7,5 Grad ausgeführt.

Es hat sich weiterhin als günstig mit Blick auf eine Vermeidung jeglicher Staudruckbildung herausgestellt, wenn die von der zweiten Sitzfläche und dem ersten Endabschnitt gebildete erste Umlaufkante mit einer kleinstmöglichen zweiten Eckenabrundung abgerundet ist. Im Idealfall wäre hier eine scharfkantige Ausführung vorzusehen, die jedoch aus festigungstechnischen und praktischen Gründen (Gefährdung der ersten Dichtung) nicht zulässig ist.

Um Staudruckbildung bei dem Eintritt der ersten Sitzreinigungsströmung in die Umlenkfläche im zweiten Schließglied zu vermeiden, sieht ein weiterer Vorschlag vor, dass die von der Anschlagfläche und der Umlenkfläche gebildete zweite Umlaufkante mit einer kleinstmöglichen ersten Eckenabrundung abgerundet ist. Ein scharfkantiger Übergang in diesem Bereich ist aus fertigungstechnischen und praktischen Gründen nicht zulässig, ein relativ großer Abrundungsradius ist kontraproduktiv und führt zur unerwünschten Staudruckbildung.

Um zu vermeiden, dass die erste Sitzreinigungsströmung nach Verlassen der Umlenkfläche die Mitteldichtung oder die Stirnfläche der Ausnehmung staudruckbildend anströmt, ist weiterhin vorgesehen, dass die Umlenkfläche die Stirnfläche um einen axialen Hinterschneidungsabstand hinterschneidet. Dadurch kann die Kontur der Umlenkfläche im Bereich ihres Ausmündungspunktes derart um einen Umlenkwinkel gegenüber der Stirnfläche der Ausnehmung angestellt werden, dass die erste Sitzreinigungsströmung die Mitteldichtung gerade tangiert, dadurch leicht in Richtung zum zweiten Schließglied hin abgelenkt wird und dann dem Wandverlauf der angrenzenden Stirnfläche der Ausnehmung zum Zwecke der Reinigung derselben folgen kann. Es hat sich als zweckmäßig herausgestellt, wenn der Umlenkwinkel im Bereich von 5 bis 20, bevorzugt mit 15 Grad ausgeführt ist.

Ein befriedigendes Strömungsergebnis wird gemäß einem weiteren Vorschlag dadurch erreicht, dass sich die Kontur aus einer Abfolge gekrümmter Abschnitte zusammensetzt, die an ihren jeweiligen Übergangsstellen jeweils eine gemeinsame Tangente besitzen. Eine andere Ausführungsform sieht vor, dass die Kontur aus einem einzigen Abschnitt kontinuierlich veränderter Krümmungen besteht. Schließlich wird auch vorgeschlagen, dass die Kontur aus einem einzigen Abschnitt mit konstanter Krümmung gebildet ist.

Um unter allen Druck- und Geschwindigkeitsbedingungen eine einwandfreie und störungsfreie Ableitung des Reinigungsmittels sicherzustellen, ist vorgesehen, dass die dem Leckagehohlraum zugewandte stirnseitige Begrenzung des ersten Schließgliedes eine allseits umfängliche, zur Ablaufbohrung hin abfallende Anschrägung aufweist. Diese Anschrägung ist zweckmäßig als Kegelmantelfläche ausgeführt, die gegenüber der Grundfläche des Kegels im Bereich von 10 bis 20 Grad, bevorzugt 15 Grad geneigt ist.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im Übrigen Leckagehohlraum, soweit dies konstruktiv möglich ist, verzichtet wird. Diesbezüglich sieht daher ein weiterer Vorschlag vor, dass eine mit dem ersten Schließglied verbundene erste Verstellstange eine mit dem zweiten Schließglied verbundene, als Hohlstange ausgeführte zweite Verstellstange konzentrisch durchdringt, sich fliegend durch die Ablaufbohrung hindurch fortsetzt und an einem dem zweiten Schließglied abgewandten Ende des ersten Schließgliedes mit letzterem über wenigstens eine im Wesentlichen radial orientierte Traverse fest verbunden ist. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

In diesem Zusammenhang wird weiterhin vorgeschlagen, dass drei über den Umfang gleichmäßig verteilt angeordnete Traversen fest an einem Verstellstangenabschnitt vorgesehen sind, die jeweils radial außenseits fest mit einem umlaufenden Ring verbunden sind, und dass der Verstellstangenabschnitt, die Traversen und der Ring ein einstückiges Anschweißteil bilden. Dabei ist es weiterhin vorteilhaft, wenn sich der Anschweißteil außenseits über den Ring an einen einen leckagehohlraumfernen Abschnitt der Ablaufbohrung begrenzenden Druckausgleichskolben und innenseits über den Verstellstangenabschnitt an die erste Verstellstange anschließt und wenn der Ring in seinem Innendurchmesser derart gegenüber dem Durchmesser der Ablaufbohrung und der Zwischenschaltung eines konisch sich erweiternden Übergangsbereichs vergrößert ist, dass der Innendurchgang der Ablaufbohrung durch die Traversen nicht geschmälert ist.

Eine die zweite Sitzfläche betreffende Ausgestaltung sieht vor, dass die zweite Sitzfläche kegelförmig ausgeführt ist und dass die zweite Dichtung axial/radial gegenüber der zweiten Sitzfläche im Gleit-/Druckeingriff abdichtet, wobei die Anschlagfläche an der zweiten Sitzfläche erfindungsgemäß fest anliegt. Gemäß einer weiteren Ausgestaltung wird vorgeschlagen, dass die zweite Sitzfläche senkrecht zur Längsachse des Doppelsitzventils angeordnet ist, und dass die zweite Dichtung axial gegenüber der zweiten Sitzfläche im Druckeingriff abdichtet, wobei auch hier die Anschlagfläche an der zweiten Sitzfläche erfindungsgemäß fest anliegt. Derartige Lösungen mit den Vorteilen einer axial/radial wirkenden Dichtung und eines axial/radial wirkenden Sitztellers bzw. mit den Vorteilen einer rein axial wirkenden Dichtung und eines rein axial wirkenden Sitztellers sind dann möglich, wenn die zweite Dichtung zum Einen derart duktil beschaffen ist und zum Anderen auch eine volumenkonstante Formveränderung im Rahmen ihrer Einbettung derart erfahren kann, dass die erfindungsgemäß vorgesehene feste Anlage des zweiten Schließgliedes mit seiner Anschlagfläche an der zweiten Sitzfläche unter allen Bedingungen sichergestellt ist. Dabei ist die feste Anlage im Regelfall jeweils als metallische Anlage ausgeführt.

### KURZBESCHREIBUNG DER ZEICHNUNGEN

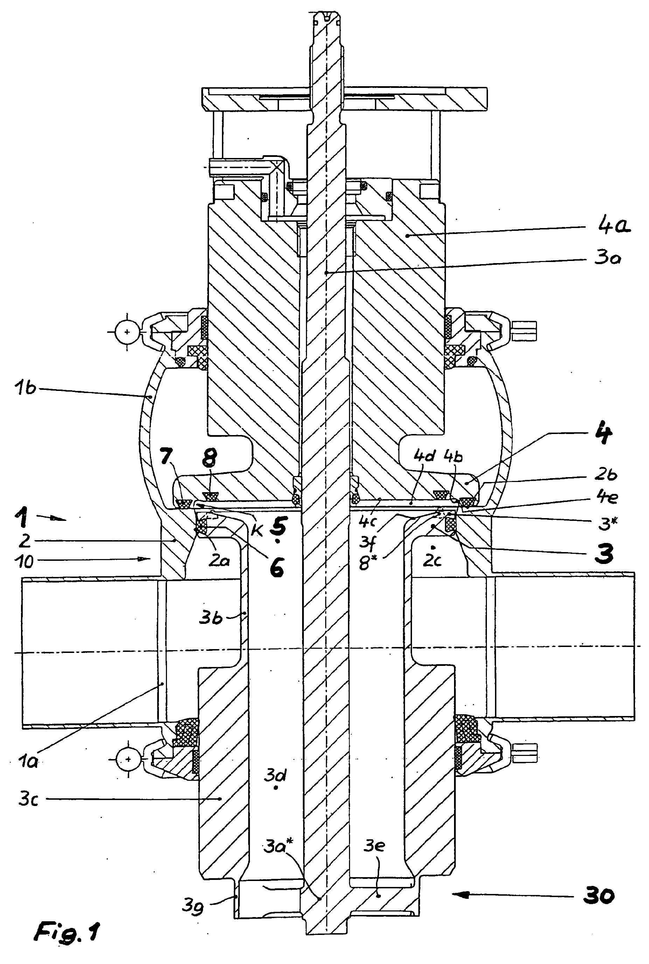

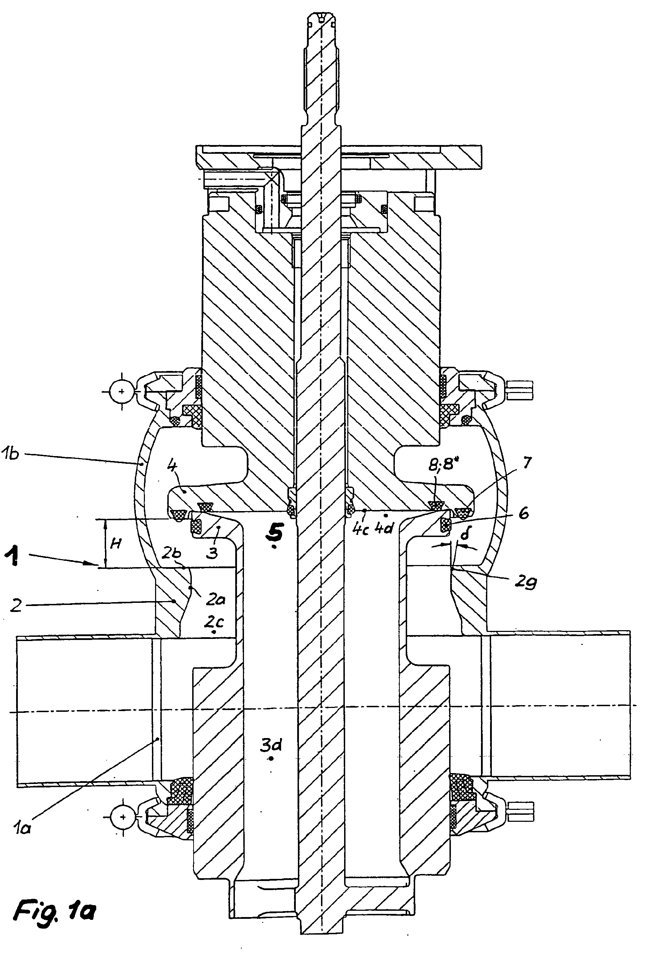

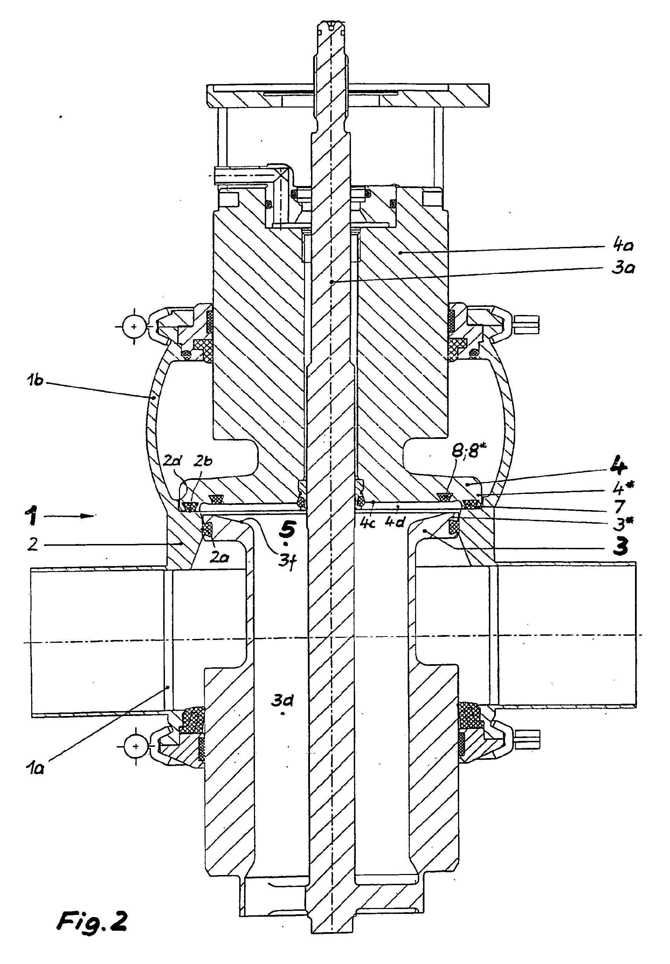

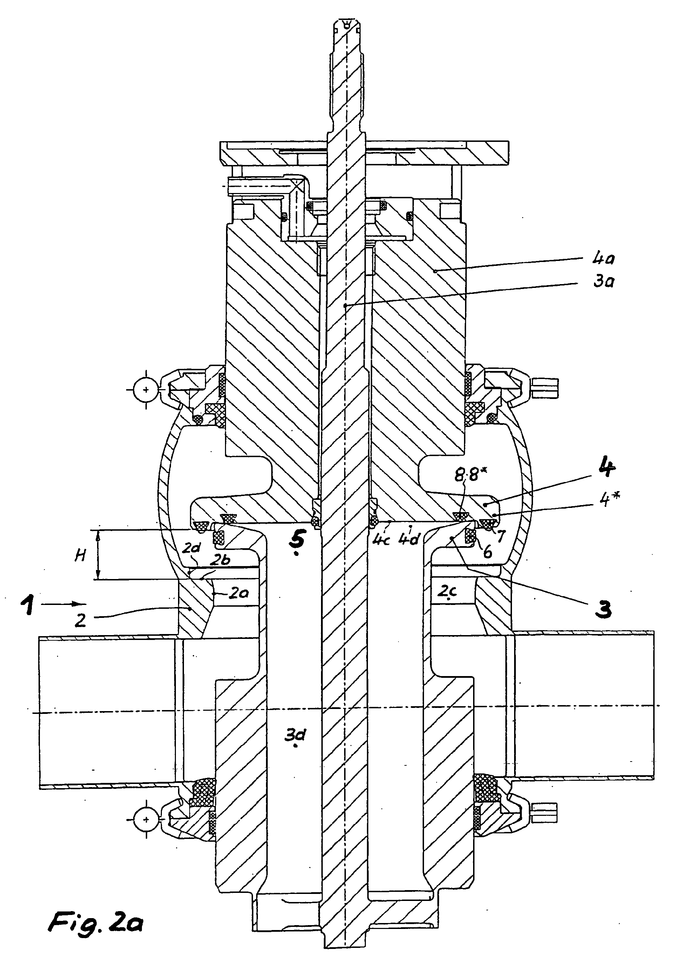

Ein Ausführungsbeispiel des vorgeschlagenen sitzreinigungsfähigen Doppelsitzventils gemäß der Erfindung ist in den Figuren 2 bis 5b der Zeichnung dargestellt und wird nachfolgend nach Aufbau und Funktion beschrieben. Die Figuren 1 und 1a zeigen keine erfindungsgemäß beanspruchte Ausführungsform; sie werden zur Erläuterung des grundsätzlichen Aufbaus dieser Ausführungsform herangezogen. Es zeigen
- **Figur 1**: im Längs- und Meridianschnitt ein sitzreinigungsfähiges Doppelsitzventil mit wesentlichen Merkmalen eines Doppelsitzventils der gattungsgemäßen Art, wobei sich das Doppelsitzventil in seiner Schließstellung befindet und eine Mitteldichtung im zweiten Schließglied angeordnet ist;
- **Figur 1a**: im Längs- und Meridianschnitt das Doppelsitzventils gemäß **Figur 1****,** wobei dieses sich in seiner Offenstellung befindet;
- **Figur 2**: im Längs- und Meridianschnitt das erfindungsgemäße Doppelsitzventil, wobei sich das Doppelsitzventil in seiner Schließstellung befindet und eine Begrenzung der Reinigungsmittelmenge nunmehr in beiden Sitzreinigungsstellungen jeweils mittels eines Drosselspaltes vorgesehen ist;
- **Figur 2a**: im Längs- und Meridianschnitt das Doppelsitzventil gemäß **Figur 2** in seiner Offenstellung;
- **Figur 3**: im Längs- und Ausschnitt eine vergrößerte Darstellung des Sitzbereichs des Doppelsitzventils gemäß den **Figuren 1** bis **2a****;**
- **Figur 4**: in schematischer und vergrößerter Darstellung eine Kontur des Sitzbereichs für das erste Schließglied und der angrenzenden zweiten Sitzfläche für ein Doppelsitzventil gemäß den **Figuren 1** bis **2a****;**
- **Figur 5a**: in perspektivischer Darstellung ein einstückiges Anschweißteil, bestehend aus drei einen Verstellstangenabschnitt mit einem Ring jeweils fest verbindenden Traversen, zur Verbindung der ersten Ventilstange mit einem am leckagehohlraumfernen Ende des ersten Schließgliedes angeordneten Druckausgleichskolben und

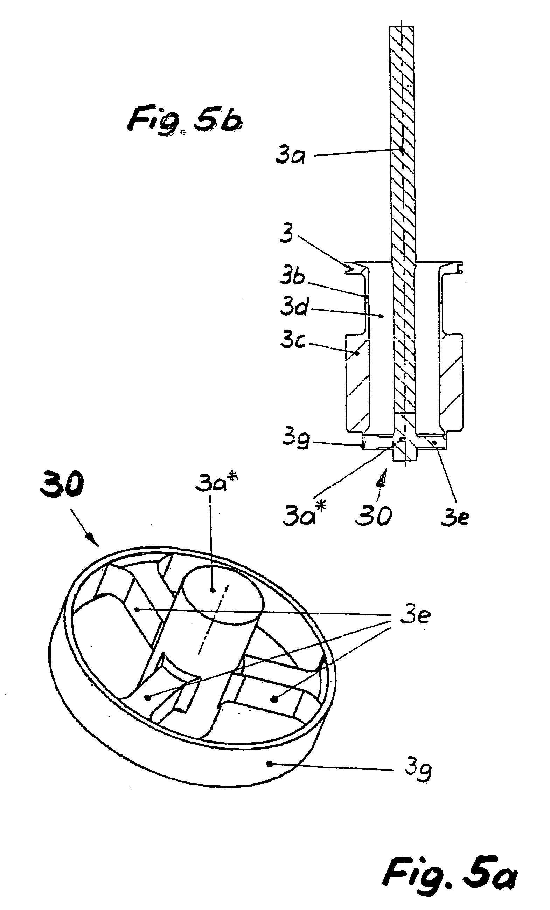

- **Figur 5a**: im Meridianschnitt die Verbundkonstruktion aus erstem Schließglied und mittelbar angrenzendem Druckausgleichskolben, Anschweißteil und erste Ventilstange.

### DETAILLIERTE BESCHREIBUNG

Ein Doppelsitzventil 1 mit wesentlichen Merkmalen eines Doppelsitzventils der gattungsgemäßen Art (**Figuren 1** und **1a**) besteht im Wesentlichen aus einem Ventilgehäuse 10 mit einem ersten und einem zweiten Ventilgehäuseteil 1a bzw. 1b, zwei unabhängig voneinander bewegbaren Schließgliedern 3 und 4 mit jeweils zugeordneten Verstellstangen 3a bzw. 4a und einem Sitzring 2, der über eine innenseitige Verbindungsöffnung 2c eine Verbindung zwischen den Ventilgehäuseteilen 1a, 1b herstellt.

Das als Schieberkolben ausgebildete erste Schließglied 3 (aktives Schließglied) findet in der Schließstellung des Doppelsitzventils 1 (**Figur 1**) in einer von der Verbindungsöffnung 2c gebildeten ersten Sitzfläche 2a, die als zylindrische Sitzfläche ausgeführt ist, dichtend Aufnahme. Hierzu ist in dem Schieberkolben 3 eine erste Dichtung 6 vorgesehen, die ausschließlich durch radiale Vorspannung mit der ersten Sitzfläche 2a zusammenwirkt (radiale Dichtung mit Gleiteingriff). Das als Sitzteller ausgebildete zweite Schließglied 4 wirkt in der Schließstellung des Doppelsitzventils 1 mit einer zweiten Sitzfläche 2b zusammen, die senkrecht zur Längsachse des Doppelsitzventils 1 an der Oberseite des Sitzringes 2 ausgeführt ist. Die Abdichtung erfolgt über eine zweite Dichtung 7, die axial gegenüber der zweiten Sitzfläche 2b abdichtet (Dichtung mit Druckeingriff).

Die beiden Schließglieder 3, 4 bilden sowohl in der dargestellten Schließ- als auch in einer Offenstellung (**Figur 1a**) zwischen sich einen Leckagehohlraum 5, der über eine Ablaufbohrung 3d, die einen sich an das erste Schließglied 3 anschlie-βenden Verbindungsteil 3b und einen sich an letzterem fortsetzenden Druckausgleichskolben 3c jeweils zentrisch durchdringt, mit der Umgebung des Doppelsitzventils 1 verbunden ist.

Üblicherweise ist die erste Verstellstange 3a im Bereich des ersten Schließgliedes 3 mit letzterem über mehrere die Ablaufbohrung 3d sternförmig und in radialer Richtung durchsetzende Stege fest verbunden. Da diese Stege negative Rückwirkungen auf die Strömungsverhältnisse und das Strömungsbild im Leckagehohlraum 5 haben können, ist bei dem Doppelsitzventil 1 vorgesehen, diese mechanisch notwendigen Verbindungsstellen in Form von drei über den Umfang gleichmäßig verteilt angeordnete Traversen 3e ein Stück weit vom Leckagehohlraum 5 entfernt, vorzugsweise an das dem ersten Schließglied 3 abgewandte Ende des Druckausgleichskolbens 3c hin, zu verlagern. Die feste Verbindung mit letzterem erfolgt über einen umlaufenden Ring 3g, mit dem die Traversen 3e radial außenseits fest verbunden sind. Zweckmäßig sind die Traversen 3e, der Ring 3g und ein Verstellstangenabschnitt 3a* in einem einstückigen Anschweißteil 30 zusammengefasst.

In der dem Leckagehohlraum 5 zugewandten Stirnseite des zweiten Schließgliedes 4 ist eine zentrische Ausnehmung 4d vorgesehen (**Figuren 1****,** **1a** und **3**), die radial außenseits mit einer rotationssymmetrischen Umlenkfläche 4b beginnt und dort eine zweite Umlaufkante U2 (**Figur 3**) ausbildet und die stirnseitig von einer im Wesentlichen senkrecht zur Längsachse des Doppelsitzventils 1 orientierten Stirnfläche 4c begrenzt ist, wobei die Umlenkfläche 4b mit einem Umlenkwinkel β in die Stirnfläche 4c ausmündet. In der Stirnfläche 4c ist, radial innenseits von der Ausnehmung 4d, eine Mitteldichtung 8 angeordnet, die die Schließglieder 3, 4 bei ihrer Öffnungs- und Schließbewegung und in der Offenstellung (**Figur 1a**) gegeneinander abdichtet.

Die zweite Umlaufkante U2 grenzt in der Schließstellung des zweiten Schließgliedes 4 (**Figuren 3****,** **1a**) unmittelbar an einen ersten Endabschnitt 2g der ersten Sitzfläche 2a an. Im Meridianschnitt gesehen weist die Umlenkfläche 4b eine Kontur K mit knickfreiem Verlauf auf, wobei sich ein an den ersten Endabschnitt 2g angrenzender erster Abschnitt K1 der Kontur K über weitere Abschnitte K2, K3 bis Kn fortsetzt (**Figur 3**) und der Richtungsvektor im Endpunkt des letzten Abschnitts K5 bzw. Kn in die zentrisch im ersten Schließglied 3 angeordnete Ablaufbohrung 3d weist, ohne mit dem ersten Schließglied 3 im Bereich seiner der den Leckagehohlraum 5 berandenden Bereiche oder der Mitteldichtung 8 staudruckbildend zu kollidieren.

Damit eine erste Sitzreinigungsströmung R1, die nach einem, bezogen auf die Darstellungslage, nach unten gerichteten ersten Teilhub T1 des ersten Schließgliedes 3 über den Spalt zwischen der ersten Dichtung 6 und der ersten Sitzfläche 2a herangeführt wird, an der Mitteldichtung 8 tangential vorbeigeführt werden kann (**Figur 3**), hinterschneidet die Umlenkfläche 4b die Stirnfläche 4c um einen axialen Hinterschneidungsabstand y. Eine dem Leckagehohlraum 5 zugewandte stirnseitige Begrenzung des ersten Schließgliedes 3 besitzt einen axialen Sicherheitsabstand x vom Richtungsvektor an der Austrittsstelle der zweiten Sitzfläche 2b in den ersten Endabschnitt 2g, wobei die Austrittsstelle in Form einer ersten Umlaufkante U1 ausgebildet ist.

In der Offenstellung des Doppelsitzventils (**Figur 1a**), wenn ein voller Offnungshub H realisiert ist, wird deutlich, dass die in der Ausnehmung 4d angeordnete Mitteldichtung 8 für eine sichere Abdichtung der beiden Schließglieder 3, 4 zwischen den über die Verbindungsöffnung 2c miteinander verbundenen Ventilgehäuseteilen 1a, 1b einerseits und dem Leckagehohlraum 5 andererseits sorgt.

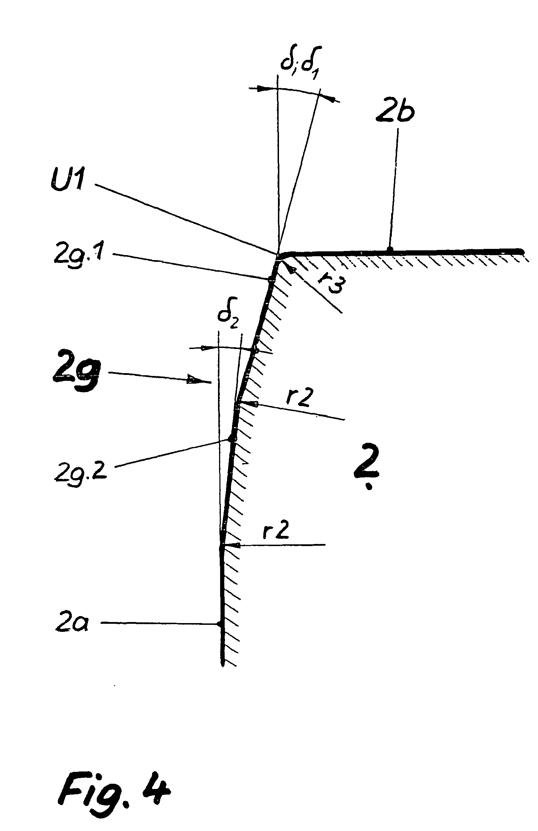

**Figur 3** verdeutlicht weiterhin, dass der erste Abschnitt K1 mit dem ersten Endabschnitt 2g fluchtet. Dabei kann der erste Endabschnitt 2g als konischer Abschnitt (erste Einfahrschräge) mit ausschließlich gekrümmten oder gekrümmten und geraden Konturelementen ausgebildet sein, der sich mit einem Abrundungsradius r2 an die Sitzfläche 2a anschließt (s. auch **Figuren 4** und **1a**) und sich zum zweiten Schließglied 4 hin öffnet. Der erste Endabschnitt 2g ist um einen Anstellwinkel 8 gegen die erste Sitzfläche 2a geneigt. Der Anstellwinkel δ ist im Bereich 0 bis 15 Grad, bevorzugt im Bereich 5 bis 15 Grad und hier wiederum bevorzugt mit δ = 15 Grad ausgeführt.

Eine weitere Optimierung des ersten Endabschnitts 2g in Form einer weiter verbesserten Einfahrschräge zeichnet sich gemäß **Figur 4** dadurch aus, dass der erste Endabschnitt 2g durch zwei mit dem Abrundungsradius r2 abgerundet ineinander übergehende Kegelmantelflächen gebildet ist, wobei ein sich an die erste Sitzfläche 2a unmittelbar anschließender zweiter Kegelmantel 2g.2 um einen zweiten Anstellwinkel δ₂ gegen die erste Sitzfläche 2a und der andere Kegelmantel 2g.1 um einen ersten Anstellwinkel δ₁ gegen die erste Sitzfläche 2a geneigt sind. Der erste Anstellwinkel δ₁ ist im Bereich 7,5 bis 15 Grad, bevorzugt mit δ₁ = 15 Grad und der zweite Anstellwinkel δ₂ ist bevorzugt im Bereich 5 bis 10 Grad, bevorzugt mit δ₂ = 7,5 Grad ausgeführt. Weiterhin ist in den **Figuren 3** und 1 gezeigt, dass die Stirnfläche des ersten Schließgliedes 3 zur Ablaufbohrung 3d hin mit einer abfallenden, konischen Anschrägung 3f versehen ist, wobei letztere bevorzugt als Kegelmantelfläche ausgeführt und diese gegenüber der Grundfläche des Kegels um einen Neigungswinkel geneigt ist. Dieser Neigungswinkel ζ wird bevorzugt im Bereich 10 bis 20 Grad und hier wiederum bevorzugt mit ζ = 15 Grad ausgeführt.

Die nach Vollzug des ersten Teilhubes T1 aus dem Spalt zwischen der ersten Dichtung 6 und der ersten Sitzfläche 2a (**Figur 3**) im Zuge der Sitzreinigung des ersten Schließgliedes 3 austretende erste Sitzreinigungsströmung R1 strömt zunächst senkrecht an der ersten Sitzfläche 2a entlang, folgt dem Verlauf des als erste Einfahrschräge ausgebildeten ersten Endabschnitts 2g bzw. der Kegelmäntel 2g.2, 2g.1 (**Figur 4**) ohne abzulösen und tritt stoßfrei in die Umlenkfläche 4b in der Ausnehmung 4d ein, wird dort entsprechend der Kontur K umgelenkt, verlässt den fünften und letzten Abschnitt K5 (K5 = Kn) mit dem Umlenkwinkel β, tangiert die Mitteldichtung 8, legt sich weitgehend tangential an die Stirnfläche 4c an und gelangt schließlich in den Bereich der Ablaufbohrung 3d. Es wird deutlich, dass der erste Abschnitt K1 mit dem ersten Endabschnitt 2g fluchtet. Damit die erste Sitzreinigungsströmung R1 an der zweiten Umlaufkante U2 keinen Staudruck ausbilden kann, grenzt letztere in der Schließstellung des zweiten Schließgliedes 4 unmittelbar an den ersten Endabschnitt 2g an und ist mit einer kleinstmöglichen ersten Eckenabrundung r1 abgerundet.

Eine weitere Ausformung der Umlenkfläche 4b sieht vor, dass die Kontur K aus einer Abfolge gekrümmter Abschnitte K1 bis Kn besteht (z. B. Kreisbogen, Ellipsen, Parabeln, Hyperbeln), die an ihren jeweiligen Übergangsstellen jeweils eine gemeinsame Tangente besitzen. Gemäß einer anderen Ausgestaltung ist die Kontur K aus einem einzigen Abschnitt kontinuierlich veränderter Krümmung gebildet (z.B. Spirale oder ein anderer mathematisch geschlossen beschreibbarer Kurvenverlauf). Die Kontur K ist nach einem weiteren Vorschlag mit einem einzigen Abschnitt mit konstanter Krümmung ausgeführt (z.B. ein einziger Kreisbogen mit dem erforderlichen tangentialen Ein- und Austritt).

Bei dem Doppelsitzventil 1 ist die zweite Sitzfläche 2b senkrecht zur Längsachse des Doppelsitzventils (**Figuren 1****,** **1a****,** **2****,** **2a****,** **3**) angeordnet, wobei die im zweiten Schließglied 4 angeordnete zweite Dichtung 7 axial gegenüber dieser zweiten Sitzfläche 2b im Druckeingriff abdichtet. Diese Lösung ist dann möglich, wenn die axial wirkende zweite Dichtung 7 so duktil und eine volumenkonstante Formveränderung derart möglich ist, dass die feste Anschlagposition des zweiten Schließgliedes 4 über eine schließgliedseitige Anschlagfläche 4e im Bereich der in die erste Sitzfläche 2a austretenden zweiten Sitzfläche 2b sichergestellt ist. Die die zweite Dichtung 7 radial außenseits berandende Stirnfläche des zweiten Schließgliedes 4 tritt zur Sicherstellung der vorstehend beschriebenen definierten festen Anschlagposition durch die Anschlagfläche 4e in axialer Richtung ein Stück zurück (**Figur 3**).

Die zweite Sitzfläche 2b kann auch kegelförmig ausgeführt sein, wobei die zweite Dichtung 7 axial/radial gegenüber der zweiten Sitzfläche 2b im Gleit-/Druckeingriff abdichtet.

Aus **Figur 1** ist ersichtlich, dass das sitzreinigungsfähige Doppelsitzventil 1 in einer abgewandelten Ausführungsform, bei der eine alternative Mitteldichtung 8* im ersten Schließglied 3 angeordnet ist (gestrichelt dargestellt), uneingeschränkt alle vorstehend beschriebenen Merkmale aufweist. Die alternative Mitteldichtung 8* korrespondiert und wirkt in diesem Falle mit der Stirnfläche 4c der Ausnehmung 4d im zweiten Schließglied 4 zusammen.

Die Sitzreinigung des zweiten Schließgliedes 4 erfolgt dadurch (**Figur 3**), dass letzteres um einen zweiten Teilhub T2 spaltweit von seiner zugeordneten zweiten Sitzfläche 2b angelüftet und Reinigungsmittel in Form einer zweiten Sitzreinigungsströmung R2 aus dem angrenzenden ersten Ventilgehäuseteil 1b über die freigelegte zweite Sitzfläche 2b in den Leckagehohlraum 5 geführt wird. Um sicherzustellen, dass die zweite Sitzreinigungsströmung R2 nicht vorzeitig in Richtung des ersten Schließgliedes 3 abgelenkt wird, ist die von der zweiten Sitzfläche 2b und dem ersten Endabschnitt 2g gebildete erste Umlaufkante U1 mit einer kleinstmöglichen zweiten Eckenabrundung r3 abgerundet (**Figur 4**), wodurch an dieser Stelle eine definierte Strömungsabrissstelle entsteht. Durch diese Maßnahme wird sichergestellt, dass die zweite Sitzreinigungsströmung R2 nicht auf den Sitzbereich der ersten Dichtung 6 gerichtet ist.

Das erste Schließglied 3 ist bei der Sitzreinigung des zweiten Schließgliedes 4 axial derart positioniert, dass die zweite Sitzreinigungsströmung R2 unbehindert über das erste Schließglied 3 hinweg strömen kann. Abhängig von den gegebenen Druckverhältnissen und unter dem Einfluss der Schwerkraft bei Anordnung des Doppelsitzventils 1 gemäß Zeichnungslage nimmt der Flüssigkeitsstrahl einen leicht parabelförmigen Verlauf, so dass die Stirnfläche des ersten Schließgliedes 3 mit seiner Anschrägung 3f tangential überströmt wird, was aus reinigungstechnischen Gründen wünschenswert ist. Durch diese Strömungsführung und Positionierung des ersten Schließgliedes 3 wird sogar ein Besaugen des Sitzbereichs der ersten Dichtung 6 erreicht, so dass selbst bei Verlust oder signifikanter Beschädigung der ersten Dichtung 6 kein Reinigungsmittel R2 in das benachbarte erste Ventilgehäuseteil 1a eintreten kann.

Das leckageraumseitige Ende des Spaltes zwischen dem zweiten Schließglied 4 und der zugeordneten zweiten Sitzfläche 2b ist durch die vorstehend beschriebene feste Anschlagposition des zweiten Schließgliedes 4 mit seiner Anschlagfläche 4e an der zweiten Sitzfläche 2b weitestgehend dicht verschlossen (soweit dies bei einer Anlage fest gegen fest, vorzugsweise Metall gegen Metall, grundsätzlich möglich ist). Reinigungsflüssigkeit der ersten Sitzreinigungsströmung R1 kann nicht mehr in den Spalt zwischen dem zweiten Schließglied 4 und der zugeordneten zweiten Sitzfläche 2b und damit in den Bereich der zweiten Dichtung 7 eintreten. Selbst bei ggf. stark beschädigter oder ggf. gänzlich entfernter zweiter Dichtung 7 ist daher kein Durchtritt für Reinigungsflüssigkeit R1 mehr gegeben.

Die erfindungsgemäß beanspruchte Ausführungsform des Doppelsitzventils 1 zeigen die **Figur 2** (Schließstellung) und die **Figur 2a** (Offenstellung). Das erste Schließglied 3 weist leckageraumseitig einen zylindrischen ersten Ansatz 3* auf, der mit dem zugeordneten Teil der Umfangsfläche der Verbindungsöffnung 2c im Sitzring 2 einen ringförmigen ersten Drosselspalt D1 (siehe auch **Figur 3**) bildet. Dieser erste Drosselspalt D1 wird wirksam, wenn das erste Schließglied 3 um den ersten Teilhub T1 so weit innerhalb der zylindrischen ersten Sitzfläche 2a nach unten verschoben wird, dass die erste Dichtung 6 von letzterer freikommt und die erste Sitzreinigungsströmung R1 aus dem ersten Ventilgehäuseteil 1a herangeführt und in den Leckagehohlraum 5 eingeleitet wird.

Das zweite Schließglied 4 weist, bezogen auf seine zweite Dichtung 7, radial au-βenseits eine zylindrische Umfangskontur 4* auf, gebildet durch eine zylindrische äußere Form des zweiten Schließgliedes 4, die mit einer ringförmigen zylindrischen Ausnehmung 2d in der Verbindungsöffnung 2c auf der Seite des zweiten Schließgliedes 4 einen ringförmigen zweiten Drosselspalt D2 bildet (**Figur 3**). Dieser zweite Drosselspalt D2 wird wirksam, wenn das zweite Schließglied 4 um den zweiten Teilhub T2 von der zweiten Sitzfläche 2b angehoben wird, so dass die zweite Sitzreinigungsströmung R2 aus dem zweiten Ventilgehäuseteil 1 b herangeführt und in den Leckagehohlraum 5 eingeleitet wird.

In **Figur 5a** ist das einstückige Anschweißteil 30 dargestellt, das aus dem Verstellstangenabschnitt 3a*, den drei Traversen 3e und dem Ring 3g gebildet ist. Die drei über den Umfang des Verstellstangenabschnitts 3a* gleichmäßig verteilt angeordneten Traversen 3e sind fest mit diesem verbunden. Sie sind jeweils radial außenseits gleichfalls fest mit dem umlaufenden Ring 3g verbunden. Der Anschweißteil 30 ist außenseits über den Ring 3g an den den leckagehohlraumfernen Abschnitt der Ablaufbohrung 3d begrenzenden Druckausgleichskolben 3c (s. **Figur 5b**) und innenseits über den Verstellstangenabschnitt 3a* an die erste Verstellstange 3a angeschweißt. Dabei ist der Ring 3g in seinem Innendurchmesser derart gegenüber dem Durchmesser der Ablaufbohrung 3d unter Zwischenschaltung eines konisch sich erweiternden Übergangsbereichs vergrößert, dass der Innendurchgang der Ablaufbohrung 3d durch die Traversen 3e nicht geschmälert ist.

### BEZUGSZEICHENLISTE DER VERWENDETEN ABKÜRZUNGEN

- 1: Doppelsitzventil
- 10: Ventilgehäuse
- 1a: erstes Ventilgehäuseteil
- 1 b: zweites Ventilgehäuseteil

- 2: Sitzring
- 2a: erste Sitzfläche (zylindrische Sitzfläche)
- 2b: zweite Sitzfläche (axial; axial/radial; radial)
- 2c: Verbindungsöffnung
- 2d: ringförmige zylindrische Ausnehmung
- 2g: erster Endabschnitt (erste Einfahrschräge)
- 2g.1: erster Kegelmantel
- 2g.2: zweiter Kegelmantel

- 3: erstes Schließglied (Schieberkolben)
- 3*: zylindrischer erster Ansatz
- 3a: erste Verstellstange
- 3b: Verbindungsteil
- 3c: Druckausgleichskolben
- 3d: Ablaufbohrung
- 3f: Anschrägung

- 30: Anschweißteil
- 3a*: Verstellstangenabschnitt
- 3e: Traverse
- 3g: Ring

- 4: zweites Schließglied
- 4*: Umfangskontur
- 4a: zweite Verstellstange
- 4b: Umlenkfläche
- 4c: Stirnfläche
- 4d: Ausnehmung
- 4e: Anschlagfläche (schließgliedseitig)

- 5: Leckagehohlraum
- 6: erste Dichtung (radial)
- 7: zweite Dichtung (axial; axial/radial)
- 8: Mitteldichtung (im zweiten Schließglied 4)
- 8*: alternative Mitteldichtung (im ersten Schließglied 3)

- r1: erste Eckenabrundung (zweites Schließglied 4)
- r2: Abrundungsradius (erste Einfahrschräge 2g; 2g.1, 2g.2)
- r3: zweite Eckenabrundung (gehäuseseitig; Sitzring 2)

- x: axialer Sicherheitsabstand
- y: axialer Hinterschneidungsabstand

- β: Umlenkwinkel
- δ: Anstellwinkel (der ersten Einfahrschräge 2g)
- δ₁: erster Anstellwinkel (erster konischer Abschnitt 2g.1)
- δ₂: zweiter Anstellwinkel (zweiter konischer Abschnitt 2g.2)
- ζ: Neigungswinkel

- D1: erster Drosselspalt
- D2: zweiter Drosselspalt

- H: voller Öffnungshub (volle Offenstellung)

- K: Kontur der Umlenkfläche 4b
- K1: erster Abschnitt (erste Gerade)
- K2: erster Umlenkradius r5
- K3: dritter Abschnitt (zweite Gerade)
- K4: zweiter Umlenkradius r6
- K5: fünfter Abschnitt (dritte Gerade)
- Kn: letzter Abschnitt

- R1: erste Sitzreinigungsströmung
- R2: zweite Sitzreinigungsströmung

- T1: erster Teilhub (erste Teiloffenstellung/erste Sitzreinigungsstellung)
- T2: zweiter Teilhub (zweite Teiloffenstellung/zweite Sitzreinigungsstellung)

- U1: erste Umlaufkante
- U2: zweite Umlaufkante

## Patentansprüche

1. Sitzreinigungsfähiges Doppelsitzventil mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1a; 1b) in ein anderes (1b; 1a) verhindern, die sowohl in der Schließ- als auch in der Offenstellung einen Leckagehohlraum (5) begrenzen, der mit der Umgebung des Doppelsitzventils (1) verbunden ist, wobei in der Schließstellung das als Schieberkolben ausgebildete erste Schließglied (3) in einer die Ventilgehäuseteile (1a, 1b) miteinander verbindenden Verbindungsöffnung (2c) dichtend Aufnahme findet und im Zuge seiner Öffnungsbewegung am einer zweiten Sitzfläche (2b) zugeordneten, eine zweite Dichtung (7) aufweisenden zweiten Schließglied (4) über eine zwischen den Schließgliedern (3, 4) wirkende Mitteldichtung (8; 8*) dichtend zur Anlage kommt und letzteres bei der weiteren Öffnungsbewegung gleichfalls in eine Offenstellung (H) überführt wird, wobei das erste Schließglied (3) eine erste Dichtung (6) aufweist, die radial gegenüber einer in der Verbindungsöffnung (2c) ausgebildeten zylindrischen ersten Sitzfläche (2a) abdichtet, mit Schließgliedern (3, 4), die unabhängig voneinander durch einen Teilhub jeweils spaltweit in eine Sitzreinigungsstellung zwecks Spülung ihrer koaxialen Sitzflächen (2a, 2b) überführbar sind, wobei das zweite Schließglied (4) durch einen der Offnungsbewegung gleichgerichteten zweiten Teilhub (T2) und das erste Schließglied (3) durch einen der Öffnungsbewegung entgegengerichteten ersten Teilhub (T1) in seine jeweilige Sitzreinigungsstellung überführbar sind, wobei das zweite Schließglied (4) in seiner Schließstellung mit einer Anschlagfläche (4e) am Ventilgehäuse (10; 1a, 1b) anliegt, und zwar unmittelbar an die erste Sitzfläche (2a, 2g) angrenzend, wobei in der dem Leckageraum (5) zugewandten Stirnseite des zweiten Schließgliedes (4) eine zentrische Ausnehmung (4d) vorgesehen ist, die radial außenseits mit einer rotationssymmetrischen Umlenkfläche (4b) beginnt und stirnseitig von einer im Wesentlichen senkrecht zur Längsachse des zweiten Schließgliedes (4) orientierten Stirnfläche (4c) begrenzt ist, wobei die Umlenkfläche (4b) in die Stirnfläche (4c) ausmündet,
wobei die Umlenkfläche (4b) und die Anschlagfläche (4e) eine zweite Umlaufkante (U2) ausbilden, die in der Schließstellung des zweiten Schließgliedes (4) unmittelbar an einen ersten Endabschnitt (2g) der ersten Sitzfläche (2a) angrenzt, wobei, im Meridianschnitt gesehen, die Umlenkfläche (4b) eine Kontur (K) mit knickfreiem Verlauf aufweist, und ein Richtungsvektor im Ausmündungspunkt der Umlenkfläche (4b) in eine zentrisch im ersten Schließglied (3) angeordnete Ablaufbohrung (3d) weist, ohne mit dem ersten Schließglied (3) im Bereich seiner den Leckagehohlraum (5) berandenden Bereiche oder der Mitteldichtung (8; 8*) staudruckbildend zu kollidieren, und wobei eine dem Leckagehohlraum (5) zugewandte stirnseitige Begrenzung des ersten Schließgliedes (3) einen axialen Sicherheitsabstand (x) vom Richtungsvektor an einer als eine erste Umlaufkante (U1) ausgebildeten Austrittsstelle der zweiten Sitzfläche (2b) in den ersten Endabschnitt (2g) besitzt,
**dadurch gekennzeichnet,**
**dass** die Anschlagfläche (4e) an einer der zweiten Dichtung (7) radial innenseits benachbarten Begrenzungsfläche des zweiten Schließgliedes (4) angeordnet ist und in der Schließstellung des zweiten Schließgliedes (4) an der zweiten Sitzfläche (2b) anliegt, dass das zweite Schließglied (4), bezogen auf seine zweite Dichtung (7), radial außenseits eine zylindrische Umfangskontur (4*) aufweist, und dass die Umfangskontur (4*) mit einer ringförmigen zylindrischen Ausnehmung (2d) in der Verbindungsöffnung (2c) auf der Seite des zweiten Schließgliedes (4) einen ringförmigen zweiten Drosselspalt (D2) bildet.

2. Doppelsitzventil nach Anspruch 1,
**dadurch gekennzeichnet,**
**dass** die Mitteldichtung (8) in der Stirnfläche (4c) des zweiten Schließglieds (4) angeordnet ist.

3. Doppelsitzventil nach Anspruch 1 oder 2,
**dadurch gekennzeichnet,**
**dass** der Sicherheitsabstand (x) wenigstens so groß wie die Summe aller Fertigungstoleranzen der Bauteile des Doppelsitzventils (1) ist, die in der Schließstellung des ersten Schließgliedes (3) dessen geringsten axialen Abstand zur zweiten Sitzfläche (2b) bestimmen.

4. Doppelsitzventil nach Anspruch 1,
**dadurch gekennzeichnet,**
**dass** eine alternative Mitteldichtung (8*) in der dem Leckagehohlraum (5) zugewandten stirnseitigen Begrenzung des ersten Schließgliedes (3) angeordnet ist und mit der Stirnfläche (4c) zusammenwirkt.

5. Doppelsitzventil nach Anspruch 4,
**dadurch gekennzeichnet,**
**dass** der Sicherheitsabstand (x) wenigstens so groß wie die Summe aller Fertigungstoleranzen der Bauteile des Doppelsitzventils (1) ist, die in der Schließstellung des ersten Schließgliedes (3) dessen geringsten axialen Abstand zur zweiten Sitzfläche (2b) bestimmen, zuzüglich des axialen Abstandes, um den die alternative Mitteldichtung (8*) aus der dem Leckagehohlraum (5) zugewandten stirnseitigen Begrenzung des ersten Schließgliedes (3) herausragt.

6. Doppelsitzventil nach einem der Ansprüche 1 bis 5,
**dadurch gekennzeichnet,**
**dass** ein Richtungsvektor am Anfangspunkt der Kontur (K) mit dem ersten Endabschnitt (2g) fluchtet.

7. Doppelsitzventil nach einem der Ansprüche 1 bis 6,
**dadurch gekennzeichnet,**
**dass** der erste Endabschnitt (2g) als konischer Abschnitt in Form einer ersten Einfahrschräge) ausgebildet ist, der sich mit einem Abrundungsradius (r2) an die Sitzfläche (2a) anschließt und sich zum zweiten Schließglied (4) hin öffnet.

8. Doppelsitzventil nach Anspruch 7,
**dadurch gekennzeichnet, dass** die erste Einfahrschräge (2g) durch wenigstens eine Kegelmantelfläche gebildet ist.

9. Doppelsitzventil nach Anspruch 8,
**dadurch gekennzeichnet, dass** die erste Einfahrschräge (2g) um einen Anstellwinkel (δ) gegen die erste Sitzfläche (2a) geneigt ist.

10. Doppelsitzventil nach Anspruch 9,
**dadurch gekennzeichnet,**
**dass** der Anstellwinkel (δ) im Bereich 0 ≤ δ ≤ 15 Grad, bevorzugt im Bereich 5 ≤ δ ≤ 15 Grad, bevorzugt mit δ = 15 Grad ausgeführt ist.

11. Doppelsitzventil nach Anspruch 8,
**dadurch gekennzeichnet,**
**dass** der erste Endabschnitt (2g) durch zwei mit dem Abrundungsradius (r2) abgerundet ineinander übergehende Kegelmantelflächen gebildet ist, wobei ein sich an die erste Sitzfläche (2a) unmittelbar anschließender zweiter Kegelmantel (2g.2) um einen zweiten Anstellwinkel (δ₂) gegen die erste Sitzfläche (2a) und der andere Kegelmantel (2g.1) um einen ersten Anstellwinkel (δ₁) gegen die erste Sitzfläche (2a) geneigt sind, und wobei der erste Anstellwinkel (δ₁) im Bereich 7,5 ≤ δ₁ ≤ 15 Grad, bevorzugt mit δ₁ = 15 Grad und der zweite Anstellwinkel (δ₂) im Bereich 5 ≤ δ₂ ≤ 10 Grad, bevorzugt mit δ₂ = 7,5 Grad ausgeführt sind.

12. Doppelsitzventil nach einem der Ansprüche 1 bis 11,
**dadurch gekennzeichnet,**
**dass** die von der zweiten Sitzfläche (2b) und dem ersten Endabschnitt (2g) gebildete erste Umlaufkante (U1) mit einer kleinstmöglichen zweiten Eckenabrundung (r3) abgerundet ist.

13. Doppelsitzventil nach einem der Ansprüche 1 bis 12,
**dadurch gekennzeichnet, dass** die zweite Umlaufkante (U2) mit einer kleinstmöglichen ersten Eckenabrundung (r1) abgerundet ist.

14. Doppelsitzventil nach einem der Ansprüche 1 bis 13,
**dadurch gekennzeichnet, dass** die Umlenkfläche (4b) die Stirnfläche (4c) um einen axialen Hinterschneidungsabstand (y) hinterschneidet.

15. Doppelsitzventil nach einem der Ansprüche 1 bis 14,
**dadurch gekennzeichnet,**
• **dass** die Kontur (K) aus einer Abfolge gekrümmter Abschnitte (K1, K2, K3, ..., Kn) besteht, die an ihren jeweiligen Übergangsstellen jeweils eine gemeinsame Tangente besitzen
• oder dass die Kontur (K) aus einem einzigen Abschnitt kontinuierlich veränderter Krümmungen besteht
• oder dass die Kontur (K) aus einem einzigen Abschnitt mit konstanter Krümmung besteht.

16. Doppelsitzventil nach einem der Ansprüche 1 bis 15,
**dadurch gekennzeichnet,**
**dass** der Richtungsvektor des letzten Abschnitts (Kn) gegenüber der Stirnfläche (4c) einen Umlenkwinkel β), bevorzugt im Bereich 5 ≤ β ≤ 20 Grad, bevorzugt β = 15 Grad aufweist.

17. Doppelsitzventil nach einem der Ansprüche 1 bis 16,
**dadurch gekennzeichnet,**
**dass** die Ablaufbohrung (3d) den Leckagehohlraum (5) mit der Umgebung des Doppelsitzventils (1) verbindet, und dass die dem Leckagehohlraum (5) zugewandte stirnseitige Begrenzung des ersten Schließgliedes (3) eine allseits umfänglich zur Ablaufbohrung (3d) hin abfallende Anschrägung (3f) aufweist.

18. Doppelsitzventil nach Anspruch 17, **dadurch gekennzeichnet,**
**dass** die Anschrägung (3f) als Kegelmantelfläche ausgeführt ist.

19. Doppelsitzventil nach Anspruch 18,
**dadurch gekennzeichnet,**
**dass** die Kegelmantelfläche gegenüber der Grundfläche des Kegels um einen Neigungswinkel (ζ), bevorzugt im Bereich 10 ≤ ζ ≤ 20 Grad, bevorzugt ζ = 15 Grad geneigt ist.

20. Doppelsitzventil nach einem der Ansprüche 1 bis 19,
**dadurch gekennzeichnet,**
**dass** eine mit dem ersten Schließglied (3) verbundene erste Verstellstange (3a) eine mit dem zweiten Schließglied (4) verbundene, als Hohlstange ausgeführte zweite Verstellstange (4a) konzentrisch durchdringt, sich fliegend durch die Ablaufbohrung (3d) hindurch fortsetzt und an einem dem zweiten Schließglied (4) abgewandten Ende des ersten Schließgliedes (3) mit letzterem über wenigstens eine im Wesentlichen radial orientierte Traverse (3e) fest verbunden ist.

21. Doppelsitzventil nach Anspruch 20,
**dadurch gekennzeichnet,**
**dass** drei über den Umfang gleichmäßig verteilt angeordnete Traversen (3e) fest an einem Verstellstangenabschnitt (3a*) vorgesehen sind, die jeweils radial außenseits fest mit einem umlaufenden Ring (3g) verbunden sind, und dass der Verstellstangenabschnitt (3a*), die Traversen (3e) und der Ring (3g) ein einstückiges Anschweißteil (30) bilden.

22. Doppelsitzventil nach Anspruch 21,
**dadurch gekennzeichnet,**
**dass** der Anschweißteil (30) außenseits über den Ring (3g) an einen einen leckagehohlraumfernen Abschnitt der Ablaufbohrung (3d) begrenzenden Druckausgleichskolben (3c) und innenseits über den Verstellstangenabschnitt (3a*) an die erste Verstellstange (3a) anschließt, und dass der Ring (3g) in seinem Innendurchmesser derart gegenüber dem Durchmesser der Ablaufbohrung (3d) unter Zwischenschaltung eines konisch sich erweitemden Übergangsbereichs vergrößert ist, dass der Innendurchgang der Ablaufbohrung (3d) durch die Traversen (3e) nicht geschmälert ist.

23. Doppelsitzventil nach einem der Ansprüche 1 bis 22,
**dadurch gekennzeichnet,**
**dass** die zweite Sitzfläche (2b) kegelförmig ausgeführt ist,
und **dass** die zweite Dichtung (7) axial/radial gegenüber der zweiten Sitzfläche (2b) im Gleit-/Druckeingriff abdichtet.

24. Doppelsitzventil nach einem der Ansprüche 1 bis 22,
**dadurch gekennzeichnet,**
**dass** die zweite Sitzfläche (2b) senkrecht zur Längsachse des Doppelsitzventils (1) angeordnet ist, und dass die zweite Dichtung (7) axial gegenüber der zweiten Sitzfläche (2b) im Druckeingriff abdichtet.

25. Doppelsitzventil nach einem der Ansprüche 1 bis 24,
**dadurch gekennzeichnet,**
**dass** am ersten Schließglied (3) leckageraumseitig ein zylindrischer Ansatz (3*) vorgesehen ist, der mit der ersten Sitzfläche (2a) einen ringförmigen ersten Drosselspalt (D1) bildet.

## Claims

1. A double seat valve with seat cleaning, having two serially arranged closing elements (3, 4) that are movable relative to each other, and that in the closed position of the double seat valve (1) prevent the overflow of fluids from one valve housing part (1a; 1b) into another (1b; 1a), that in the closed position as well in the open position bound a leakage cavity (5) that is connected to the surroundings of the double seat valve (1), wherein in the closed position the first closing element (3), formed as a slide piston, is received in a sealing manner in a connecting opening (2c) that connects the valve housing parts (1a, 1b) with each other, and in the course of its opening movement comes into sealing abutment, through a center seal (8; 8*) acting between the closing elements (3, 4), with a second closing element (4) that is associated with a second seat (2b) and has a second seal (7), and in a further opening movement the latter is also transferred into an open position (H), wherein the first closing element (3) has a first seal (6) that radially seals against a cylindrical first seat (2a) formed in the connecting opening (2c), with closing elements (3, 4) that can independently of each other be transferred gap wide by a partial lift, into a seat cleaning position for the purpose of rinsing their coaxial seats (2a, 2b), wherein the second closing element (4) can be transferred through a second partial lift (T2) in the same direction as the opening movement, and the first closing element (3) through a first partial lift (T1) in the direction opposed to the opening movement, each into their respective seat cleaning position, wherein the second closing element (4) in its closed position abuts with a stop surface (4e) to the valve housing (10; 1a, 1b), specifically immediately bordering on the first seat (2a, 2g), wherein in the front face of the second closing element (4), facing the leakage cavity (5), a centered recess (4d) is provided which begins radially on the outside with a rotationally symmetric deflection surface (4b) (starting point of the contour (K)), and on its front side is bounded by a front face (4c) that is oriented essentially perpendicular to the longitudinal axis of the second closing element (4), wherein the deflection surface (4b) opens into the front face (4c) (opening point of the contour (K)), wherein the deflection surface (4b) and the stop surface (4e) form a second circumferential edge (U2) which in the closed position of the second closing element (4) borders directly on a first end section (2g) of the first seat (2a), wherein, viewed in the meridian section, the deflection surface (4b) has a contour (K) with an unbent shape, and a directional vector at the opening point of the deflection surface (4b) points into a drainage hole (3d) that is centrally arranged in the first closing element (3), without colliding with the first closing element (3) in the region of its areas bounding the leakage cavity (5) or with the center seal (8;8*), creating a dynamic pressure, and wherein front side boundary of the first closing element (3), facing the leakage cavity (5), has an axial safety distance (x) from the directional vector at an outlet point of the second seat (2b), formed as a first circumferential edge (U1), into the first end section (2g)
**characterized in that** the stop surface (4e) is arranged at a periphery of the second closing element (4) adjacent radially on the inside of the second seal (7), and in the closed position of the second closing element (4) abuts the second seat (2b), that the second closing element (4) relative to its second seal (7) has radially outside a cylindrical circumferential contour (4*), and that the circumferential contour (4*), together with an annular cylindrical recess (2d) in the connecting opening (2c) on the side of the second closing element (4) forms an annular second choke gap (D2).

2. The double seat valve according to Claim 1,
**characterized in that**
the center seal (8) is arranged in the front face (4c) of the second closing element (4).

3. The double seat valve according to Claim 1 or 2,
**characterized in that**
the safety distance (x) is at least as large as the sum of all manufacturing tolerances of the components of the double seat valve (1) that in the closed position of the first closing element (3) determine its smallest axial distance to the second seat (2b).

4. The double seat valve according to Claim 1,
**characterized in that**
an alternative center seal (8*) is arranged in the front side boundary of the first closing element (3), facing the leakage cavity (5), and interacts with the front face (4c).

5. The double seat valve according to Claim 4,
**characterized in that**
the safety distance (x) is at least as large as the sum of all manufacturing tolerances of the components of the double seat valve (1) that in the closed position of the first closing element (3) determine its smallest axial distance to the second seat (2b), adding the axial distance by which the alternative center seal (8*) protrudes from the face side boundary of the closing element (3), facing the leakage cavity (5).

6. The double seat valve according to the Claims 1 to 5,
**characterized in that**
a directional vector at the starting point of the contour (K) aligns with the first end section (2g).

7. The double seat valve according to the Claims 1 to 6,
**characterized in that**
the first end section (2g) is formed as a conical end section in the form of a first opening slope, which connects with a rounding radius (r2) to the seat (2a), and opens towards the second closing element (4).

8. The double seat valve according to Claim 7,
**characterized in that**
the first opening slope (2g) is formed by at least one cone shaped surface.

9. The double seat valve according to Claim 8,
**characterized in that**
the first opening slope (2g) is inclined by a pitch (δ) with respect to the first seat (2a).

10. The double seat valve according to Claim 9,
**characterized in that**
the pitch (δ) is implemented in the range of 0 ≤ δ ≤ 15 degrees, preferably in the range of 5 ≤ δ ≤ 15 degrees, preferably with δ = 15 degrees.

11. The double seat valve according to Claim 8,
**characterized in that**
the first end section (2g) is formed by two cone shaped surfaces that transition into each other rounded with a rounding radius (r2), wherein a second cone shaped surface (2g.2) adjoining immediately to the first seat (2a) is inclined by a second pitch (δ2) with respect to the first seat 2a, and the other cone shaped surface (2g.1) by a first pitch (δ1) with respect to the first seat (2a), and where the first pitch (δ1) is implemented in the range of 7,5 ≤ δ1 ≤ 15 degrees, preferably with δ1 = 15 degrees, and the second pitch (δ2) in the range of 5 ≤ δ2 ≤ 10 degrees, preferably with δ2 = 7,5 degrees.

12. The double seat valve according to the Claims 1 to 11,
**characterized in that**
the first circumferential edge (U1) formed by the second seat (2b) and the first end section (2g) is rounded with a smallest possible second edge rounding (r3).

13. The double seat valve according to one of the claims 1 to 12,
**characterized in that**
the second circumferential edge (U2) is rounded with a smallest possible first edge rounding (r1).

14. The double seat valve according to one of the claims 1 to 13,
**characterized in that**
the deflection surface (4b) undercuts the front face (4c) with an axial undercut distance (y).

15. The double seat valve according to the Claims 1 to 14,
**characterized in that**
• the contour (K) consists of a sequence of curved sections (K1, K2, K3, ..., Kn) that at their respective transition points have in each case a common tangent,
• or that the contour (K) consists of a single section with continuously changing curvatures
• or that the contour (K) consists of a single section with constant curvature.

16. The double seat valve according to the Claims 1 to 15,
**characterized in that**
the directional vector of the last section (Kn) has a deflection angle (β) with respect to the front face (4c), preferably in the range of 5 ≤ β ≤ 20 degrees, preferably with β = 15 degrees.

17. The double seat valve according to the Claims 1 to 16,
**characterized in that**
the drainage hole (3d) connects the leakage cavity (5) with the surroundings of the double seat valve (1), and that the face side boundary of the first closing element (3), facing the leakage cavity (5), has a chamfer (3f) that is sloping on all sides circumferentially towards the drainage hole (3d).

18. The double seat valve according to Claim 17,
**characterized in that**
the chamfer (3f) is implemented as a cone shaped surface.

19. The double seat valve according to Claim 18,
**characterized in that**
the cone shaped surface is inclined with respect to the base of the cone by an inclination angle (ζ), preferably in the range of 10 ≤ ζ ≤ 20 degrees, preferably with ζ = 15 degrees.

20. The double seat valve according to the Claims 1 to 19,
**characterized in that**
a first displacement rod (3a), connected to the first closing element (3), concentrically penetrates a second displacement rod (4a), connected to the second closing element (4) and implemented as a hollow rod, continues flying through the drainage hole (3d), and is rigidly connected to the first closing element (3) at the latter's end facing away from the second closing element (4), via an essentially radially oriented traverse (3e).

21. The double seat valve according to Claim 20,
**characterized in that**
at a displacement rod section (3a*), three traverses (3e) are fixedly provided that are uniformly distributed over the circumference and that each is radially on its outside fixedly connected to a circumferential ring (3g), and that the displacement rod section (3a*), the traverses (3e), and the ring (3g) form one-piece welded part (30).

22. The double seat valve according to Claim 21,
**characterized in that**
the welded part (30) connects on its outside via the ring (3g) to a pressure compensation piston (3c) that is bounding a section of the drainage hole (3d) that is remote from the leakage cavity, and on its inside connects via the displacement rod section (3a*) to the first displacement rod (3a), and that the ring (3g) in its interior diameter is enlarged with respect to the diameter of the drainage hole (3d), interposing a conically expanding transition area, such that the interior passage through the drainage hole (3d) is not reduced by the traverses (3e).

23. The double seat valve according to the Claims 1 to 22,
**characterized in that**
the second seat (2b) is implemented with a conical shape, and that the second seal (7) seals axially / radially against the second seat (2b) in slide / pressure engagement.

24. The double seat valve according to the Claims 1 to 22,
**characterized in that**
the second seat (2b) is arranged perpendicular to the longitudinal axis of the double seat valve (1), and that the second seal (7) seals against the second seat (2b) in pressure engagement.

25. The double seat valve according to the Claims 1 to 24,
**characterized in that**
at the first closing element (3) on the side of the leakage cavity a cylindrical appendage (3*) is provided that forms together with the first seat (2a) an annular first choke gap (D1).

## Revendications

1. Soupape à double siège à possibilité de nettoyage de siège avec deux organes de fermeture (3, 4) disposés en série, mobiles l'un par rapport à l'autre et qui, dans la position de fermeture de la soupape à double siège (1), empêchent la décharge de fluides depuis une partie de boîtier de soupape (1a; 1b) dans une autre (1b ; 1a), et qui, aussi bien dans la position de fermeture que dans la position d'ouverture, délimitent une cavité de fuite (5) qui est raccordée à l'environnement de la soupape à double siège (1), le premier organe de fermeture (3) constitué en tant que tiroir étant, dans la position de fermeture, reçu de façon étanche dans une ouverture de raccordement (2c) raccordant l'une à l'autre les parties de boîtier de soupape (1a; 1b) et venant, au cours de son mouvement d'ouverture, en appui de façon étanche sur le deuxième organe de fermeture (4) affecté à une deuxième face de siège (2b) et présentant un deuxième joint d'étanchéité (7), par le biais d'un joint d'étanchéité central (8 ; 8*) agissant entre les organes de fermeture (3, 4), et ce deuxième organe de fermeture étant, lors de la suite du mouvement d'ouverture, conduit également dans une position d'ouverture (H), le premier organe de fermeture (3) présentant un premier joint d'étanchéité (6) qui réalise une étanchéité radiale par rapport à une première face de siège (2a) cylindrique constituée dans l'ouverture de raccordement (2c), avec des organes de fermeture (3, 4) qui, indépendamment l'un de l'autre, peuvent être conduits par une course partielle respectivement sur une largeur d'interstice dans une position de nettoyage de siège en vue du lavage de leurs faces de siège (2a, 2b) coaxiales, le deuxième organe de fermeture (4), par une deuxième course partielle (T2) de même direction que le mouvement d'ouverture, et le premier organe de fermeture (3), par une première course partielle (T1) de direction opposée au mouvement d'ouverture, pouvant être conduits respectivement dans leur position de nettoyage de siège, le deuxième organe de fermeture (4) appuyant, dans sa position de fermeture et par une face de butée (4e), sur le boîtier de soupape (10 ; 1a, 1b), et cela de façon directement contiguë à la première face de siège (2a, 2g), un creux (4d) centré étant prévu dans le côté frontal du deuxième organe de fermeture (4) et étant dirigé vers la cavité de fuite (5), lequel creux commence, extérieurement dans le sens radial, par une face de déviation (4b) à symétrie de rotation et est, côté frontal, limité par une face frontale (4c) orientée essentiellement perpendiculairement à l'axe longitudinal du deuxième organe de fermeture (4), la face de déviation (4b) débouchant dans la face frontale (4c), la face de déviation (4b) et la face de butée (4e) constituant une deuxième arête périphérique (U2) qui, dans la position de fermeture du deuxième organe de fermeture (4), est directement contiguë à un premier tronçon d'extrémité (2g) de la première face de siège (2a), la face de déviation (4b) présentant, en vue méridienne, un contour (K) à tracé exempt de coude, et un vecteur directionnel au point de débouché de la face de déviation (4b) étant dirigé dans un alésage d'évacuation (3d) disposé de façon centrée dans le premier organe de fermeture (3) sans entrer en collision en formant une pression dynamique avec le premier organe de fermeture (3) dans la zone de ses zones bordant la cavité de fuite (5) ou du joint d'étanchéité central (8 ; 8*), et une délimitation du premier organe de fermeture (3), côté frontal et tournée vers la cavité de fuite (5), possédant une distance de sécurité axiale (x) du vecteur directionnel sur un emplacement de sortie de la deuxième face de siège (2b), constitué en tant que première arête périphérique (U1), dans le premier tronçon d'extrémité (2g),
**caractérisée en ce que**
la face de butée (4e) est disposée sur une face de délimitation du deuxième organe de fermeture (4) qui est voisine, intérieurement dans le sens radial, du deuxième joint d'étanchéité (7), et la face de butée appuie, dans la position de fermeture du deuxième organe de fermeture (4), sur la deuxième face de siège (2b), **en ce que** le deuxième organe de fermeture (4), rapporté à son deuxième joint d'étanchéité (7), présente, extérieurement dans le sens radial, un contour périphérique (4*) cylindrique, et **en ce que** le contour périphérique (4*) forme, avec un creux cylindrique annulaire (2d), dans l'ouverture de raccordement (2c) sur le côté du deuxième organe de fermeture (4), un deuxième interstice d'étranglement (D2) annulaire.

2. Soupape à double siège selon la revendication 1,
**caractérisée en ce que**
le joint d'étanchéité central (8) est disposé dans la face frontale (4c) du deuxième organe de fermeture (4).

3. Soupape à double siège selon la revendication 1 ou 2,
**caractérisée en ce que**
la distance de sécurité (x) est au moins aussi grande que la somme de toutes les tolérances de fabrication des composants de la soupape à double siège (1) qui déterminent, dans la position de fermeture du premier organe de fermeture (3), sa distance axiale la plus faible à la deuxième face de siège (2b).

4. Soupape à double siège selon la revendication 1,
**caractérisée en ce**
**qu'**une variante de joint d'étanchéité central (8*) est disposée dans la délimitation côté frontal du premier organe de fermeture (3) qui est tournée vers la cavité de fuite (5) et coopère avec la face frontale (4c).

5. Soupape à double siège selon la revendication 4,
**caractérisée en ce que**
la distance de sécurité (x) est au moins aussi grande que la somme de toutes les tolérances de fabrication des composants de la soupape à double siège (1) qui, dans la position de fermeture du premier organe de fermeture (3), déterminent sa distance axiale la plus faible à la deuxième face de siège (2b), plus la distance axiale sur laquelle la variante de joint d'étanchéité central (8*) dépasse de la délimitation côté frontal du premier organe de fermeture (3) qui est tournée vers la cavité de fuite (5).

6. Soupape à double siège selon une des revendications 1 à 5,
**caractérisée en ce**
**qu'**un vecteur directionnel affleure, sur le point initial du contour (K), avec le premier tronçon d'extrémité (2g).

7. Soupape à double siège selon une des revendications 1 à 6,
**caractérisée en ce que**
le premier tronçon d'extrémité (2g) est constitué en tant que tronçon conique sous forme d'une première obliquité d'arrivée qui se raccorde à la face de siège (2a) avec un rayon d'arrondi (r2) et s'ouvre en direction du deuxième organe de fermeture (4).

8. Soupape à double siège selon la revendication 7,
**caractérisée en ce que**
la première obliquité d'arrivée (2g) est formée par au moins une face d'enveloppe conique.

9. Soupape à double siège selon la revendication 8,
**caractérisée en ce que**
la première obliquité d'arrivée (2g) est inclinée d'un angle d'incidence (δ) sur la première face de siège (2a).

10. Soupape à double siège selon la revendication 9,
**caractérisée en ce que**
l'angle d'incidence (δ) est réalisé dans la plage 0 ≤ δ ≤ 15 degrés, de préférence dans la plage 5 ≤ δ ≤ 15 degrés, et de préférence avec δ = 15 degrés.

11. Soupape à double siège selon la revendication 8,
**caractérisée en ce que**
le premier tronçon d'extrémité (2g) est formé par deux faces d'enveloppe coniques se fondant l'une dans l'autre et arrondies avec le rayon d'arrondi (r2), une deuxième enveloppe conique (2g.2) se raccordant directement à la première face de siège (2a) étant inclinée d'un deuxième angle d'incidence (δ₂) sur la première face de siège (2a), et l'autre enveloppe conique (2g.1) étant inclinée d'un premier angle d'incidence (δ₁) sur la première face de siège (2a), et le premier angle d'incidence (δ₁) étant réalisé dans la plage 7,5 ≤ δ₁ ≤ 15 degrés, de préférence avec δ₁ = 15 degrés, et le deuxième angle d'incidence (δ₂) étant réalisé dans la plage 5 ≤ δ₂ ≤ 10 degrés, de préférence avec δ₂ = 7,5 degrés.

12. Soupape à double siège selon une des revendications 1 à 11,
**caractérisée en ce que**
la première arête périphérique (U1) formée de la deuxième face de siège (2b) et du premier tronçon d'extrémité (2g) est arrondie avec un deuxième arrondi de coin (r3) le plus petit possible.

13. Soupape à double siège selon une des revendications 1 à 12,
**caractérisée en ce que**
la deuxième arête périphérique (U2) est arrondie avec un premier arrondi de coin (r1) le plus petit possible.

14. Soupape à double siège selon une des revendications 1 à 13,
**caractérisée en ce que**
la face de déviation (4b) contre-dépouille la face frontale (4c) sur une distance de contre-dépouille axiale (y).

15. Soupape à double siège selon une des revendications 1 à 14,
**caractérisée en ce que**
• le contour (K) se compose d'une succession de tronçons courbés (K1, K2, K3, ..., Kn) qui possèdent, à leurs emplacements de transition respectifs, respectivement une tangente commune
• ou **en ce que** le contour (K) se compose d'un unique tronçon ayant des courbures variables en continu
• ou **en ce que** le contour (K) se compose d'un unique tronçon ayant une courbure constante.

16. Soupape à double siège selon une des revendications 1 à 15,
**caractérisée en ce que**
le vecteur directionnel du dernier tronçon (Kn) présente par rapport à la face frontale (4c) un angle de déviation (β), de préférence dans la plage 5 ≤ β ≤ 20 degrés, de préférence β = 15 degrés.

17. Soupape à double siège selon une des revendications 1 à 16,
**caractérisée en ce que**
l'alésage d'évacuation (3d) raccorde la cavité de fuite (5) à l'environnement de la soupape à double siège (1), et **en ce que** la délimitation côté frontal du premier organe de fermeture (3) qui est tournée vers la cavité de fuite (5) présente une obliquité (3f) qui descend partout sur la périphérie vers l'alésage d'évacuation (3d).

18. Soupape à double siège selon la revendication 17,
**caractérisée en ce que**
l'obliquité (3f) est réalisée en tant que face d'enveloppe conique.

19. Soupape à double siège selon la revendication 18,
**caractérisée en ce que**
la face d'enveloppe conique est inclinée par rapport à la face de base du cône selon un angle d'inclinaison (ζ), de préférence dans la plage 10 ≤ ζ ≤ 20 degrés, de préférence ζ = 15 degrés.

20. Soupape à double siège selon une des revendications 1 à 19,
**caractérisée en ce**
**qu'**une première tige de réglage (3a) raccordée au premier organe de fermeture (3) traverse de façon concentrique une deuxième tige de réglage (4a), réalisée en tant que tige creuse, raccordée au deuxième organe de fermeture (4), se poursuit de façon flottante à travers l'alésage d'évacuation (3d), et est raccordée fixement, sur une extrémité du premier organe de fermeture (3) qui est éloignée du deuxième organe de fermeture (4), au premier organe de fermeture par le biais d'au moins une traverse (3e) orientée de façon essentiellement radiale.

21. Soupape à double siège selon la revendication 20,
**caractérisée en ce que**
trois traverses (3e) disposées de façon uniformément répartie sur la circonférence sont prévues de façon fixe sur un tronçon de tige de réglage (3a*) et sont raccordées respectivement extérieurement de façon radiale à une bague (3g) périphérique, et **en ce que** le tronçon de tige de réglage (3a*), les traverses (3e) et la bague (3g) forment une pièce à souder (30) d'un seul tenant.

22. Soupape à double siège selon la revendication 21,
**caractérisée en ce que**
la pièce à souder (30) se raccorde extérieurement par le biais de la bague (3g) à un piston d'équilibrage de pression (3c) délimitant un tronçon de l'alésage d'évacuation (3d) qui est éloigné de la cavité de fuite et se raccorde intérieurement, par le biais du tronçon de tige de réglage (3a*), à la première tige de réglage (3a), et **en ce que** la bague (3g) s'agrandit quant à son diamètre intérieur par rapport au diamètre de l'alésage d'évacuation (3d) avec interposition d'une zone de transition s'élargissant de façon conique de sorte que le passage intérieur de l'alésage d'évacuation (3d) n'est pas diminué par les traverses (3e).

23. Soupape à double siège selon une des revendications 1 à 22,
**caractérisée en ce que**
la deuxième face de siège (2b) est réalisée de façon conique,
et **en ce que** le deuxième joint d'étanchéité (7) réalise une étanchéité axiale/radiale par rapport à la deuxième face de siège (2b) dans une prise par glissement/pression.

24. Soupape à double siège selon une des revendications 1 à 22,
**caractérisée en ce que**
la deuxième face de siège (2b) est disposée perpendiculairement à l'axe longitudinal de la soupape à double siège (1), et **en ce que** le deuxième joint d'étanchéité (7) réalise une étanchéité axiale par rapport à la deuxième face de siège (2b) dans une prise par pression.

25. Soupape à double siège selon une des revendications 1 à 24,
**caractérisée en ce que**,
sur le premier organe de fermeture (3) il est prévu, côté cavité de fuite, un appendice (3*) cylindrique qui, avec la première surface de siège (2a), forme un premier interstice d'étranglement (D1) annulaire.
